# EUROPÄISCHE PATENTANMELDUNG

(11) **EP 4 332 444 A1**
(43) Veröffentlichungstag der Anmeldung: **06.03.2024**
(21) Anmeldenummer: 23191173.6
(22) Anmeldetag: 11.08.2023
(51) Int. Cl.: F24C 15/32, F24C 7/08

(54) **GARGERÄT MIT EINEM IN STRÖMUNG ANGEORDNETEN MESSFÜHLER**

(30) Priorität: 02.09.2022 CH 10292022
(71) Anmelder: V-Zug AG, 6300 Zug (CH)
(72) Erfinder: Lippmann, Marcel, 6422 Steinen (CH); Thielken, Lars, 5632 Buttwil (CH); Lindegger, Raphael, 6055 Alpnach Dorf (CH)
(74) Vertreter: E. Blum & Co. AG

(57) **Zusammenfassung**

Die Erfindung betrifft ein Gargerät, insbesondere einen Backofen, ein Dampfgargerät oder ein Kombigargerät. Es umfasst einen Innenraum mit einem Garraum (2) und einen Gebläseraum (3), wobei der Garraum (2) eine Türe (8) zum Schliessen und Öffnen einer Beschickungsöffnung und eine Decke (25) aufweist. Zudem umfasst das Gargerät eine Heizung (32) und einen Lüfter (31), welche im Gebläseraum (3) angeordnet sind. Der Garraum (2) und der Gebläseraum (3) sind mittels einer Trennwand (4) voneinander getrennt. Im Weiteren umfasst das Gargerät eine Auslassöffnung (41), durch welche Luft aus dem Garraum (2) strömt. An dieser Auslassöffnung (41) ist ein Messfühler (9) angeordnet.

## Beschreibung

### Gebiet der Erfindung

Die Erfindung betrifft ein Gargerät, insbesondere einen Backofen, ein Dampfgargerät oder ein Kombigargerät. Das Gargerät umfasst einen Innenraum mit einem Garraum und einen Gebläseraum. Der Garraum weist eine Türe zum Schliessen und Öffnen einer Beschickungsöffnung und eine Decke auf. Zudem sind eine Heizung und ein Lüfter vorhanden, welche im Gebläseraum angeordnet sind. Zwischen dem Garraum und dem Gebläseraum ist eine Trennwand angeordnet. Luft strömt durch mindestens eine Auslassöffnung aus dem Garraum heraus.

### Hintergrund

Es sind Gargeräte bekannt, welche einen Garraumtemperatursensor aufweisen. Dieser misst die im Garraum herrschende Lufttemperatur. Die Messung dient der Steuerung der Lufttemperatur im Garraum, welche vom Benutzer beispielsweise auf 200°C festgelegt ist. Dieser Garraumtemperatursensor ermöglicht einen nur sehr ungenauen Rückschluss auf den Gargrad des zu garenden Garguts. Es kann nicht festgestellt werden, ob das Gargut bereits ausreichend gegart ist.

Bestimmte Gargeräte umfassen zudem einen Garguttemperatursensor. Dieser Sensor misst die Temperatur eines Garguts und ermöglicht einen Rückschluss auf den Gargrad des Garguts. Der Garguttemperatursensor ist insbesondere für das Garen von Fleischstücken vorgesehen und wird vorzugsweise derart in das Fleischstück eingesetzt, dass die Messspitze des Garguttemperatursensors im Kern des Fleischsstücks zu liegen kommt. Beispielsweise ist ein zartes Stück Rindfleisch fertig gegart, sobald eine Zielkerntemperatur von 55°C gemessen wird.

### Darstellung der Erfindung

Es stellt sich die Aufgabe, ein Gargerät bereitzustellen, welches mittels einer einfachen Messvorrichtung Rückschlüsse auf den Zustand des Garguts ermöglicht.

Diese Aufgabe wird vom Gegenstand des unabhängigen Anspruchs gelöst. Der Gegenstand ist ein Gargerät, insbesondere ein Backofen, ein Dampfgargerät oder ein Kombigargerät. Ein Kombigargerät vereint mehrere Garmethoden, insbesondere diejenigen eines Backofens, eines Dampfgargeräts oder eines Mikrowellengeräts. Das Gargerät umfasst
- einen Innenraum mit einem Garraum und einem Gebläseraum. Der Garraum umfasst eine Türe zum Schliessen und Öffnen einer Beschickungsöffnung. Zudem umfasst der Garraum eine Decke. Die Beschickungsöffnung ist diejenige Öffnung, durch welche der Benutzer Zugang zum Garraum hat, d.h. durch welche der Benutzer Gargüter in den Garraum einführt und aus diesem herausführt. Ist die Türe offen, kann der Benutzer Gargüter in den Garraum einführen. Während des Betriebs des Gargeräts ist die Türe normalerweise geschlossen.
- eine Heizung und einen Lüfter, welche im Gebläseraum angeordnet sind. Der Lüfter zirkuliert Luft in und aus dem Garraum. Die Heizung erwärmt die Luft. Ein Heissluftbetrieb ist neben Ober-/Unterhitze eine standardisierte Garmethode in einem Backofen.
- eine zwischen dem Garraum und dem Gebläseraum angeordnete Trennwand. Die Trennwand separiert Garraum und Gebläseraum.
- mindestens eine Auslassöffnung durch welche Luft aus dem Garraum hinausströmt. Die Auslassöffnung ist beispielsweise in der Trennwand angeordnet, sodass Luft aus dem Garraum durch die Auslassöffnung in den Gebläseraum strömen kann. Alternativ kann die Auslassöffnung auch an der Decke des Garraums angeordnet sein, sodass Luft aus dem Garraum in einen oberhalb des Garraums angeordneten Abluftraum strömen kann.
- eine Steuerung. Die Steuerung dient beispielweise zur Steuerung der Heizung und von Sensoren.
- einen Messfühler, welcher an einer Auslassöffnung des Garraums angeordnet ist. "An" der Auslassöffnung bedeutet insbesondere maximal 3 cm, insbesondere maximal 2 cm, insbesondere maximal 1 cm, von der Auslassöffnung entfernt.

Insbesondere weist die Auslassöffnung eine Öffnungsfläche auf und der Messfühler ist in Normalrichtung der Öffnungsfläche innerhalb des Garraums oder Ausserhalb des Garraums angeordnet.

Die Luftströmung, welche den Garraum durch die Auslassöffnung verlässt, weist eine Temperatur auf, welche von der Oberflächentemperatur des Garguts beeinflusst ist. Strömt die heisse Luft durch den Garraum, gibt diese Wärmeenergie an das Gargut ab. Je kühler die Oberfläche des Garguts ist, umso kühler ist die durch die Auslassöffnung strömende Luft. Misst der Messfühler die Temperatur der Luftströmung an der Auslassöffnung, können Rückschlüsse auf die Temperatur bzw. den Garzustand des Garguts gezogen werden.

Ein im Garraum angeordnetes Gargut stösst ab einer bestimmten Gartemperatur, insbesondere bei 100°C, Dampf in den Garraum aus. Die Luft im Garraum nimmt an Feuchtigkeit zu. Diese Feuchtigkeit schlägt sich auch an der Auslassöffnung nieder, durch welche der Luftstrom den Garraum verlässt. Misst der Messfühler die Feuchtigkeit der Luftströmung an der Auslassöffnung, können Rückschlüsse auf den Garzustand des Garguts gezogen werden.

Insgesamt hat die Anordnung des Messfühlers an der Auslassöffnung den Vorteil, dass Rückschlüsse auf den Zustand des Garguts gezogen werden können, ohne dass ein Messfühler in das Gargut selbst, wie beispielsweise bei einem Garguttemperatursensor, eingesteckt werden müsste.

Mit Vorteil ist eine erste Auslassöffnung an der Trennwand angeordnet. An dieser Auslassöffnung ist ein erster Messfühler angeordnet. Im Heissluftbetrieb zirkuliert permanent Luft zwischen dem Garraum und dem Gebläseraum. Die Luftströmung wird von dem im Gebläseraum angeordneten Lüfter angetrieben. Die Anordnung des Messfühlers an der Trennwand ist somit eine geeignete Position, um Rückschlüsse auf den Zustand des Garguts zu ziehen.

Insbesondere ist die erste Auslassöffnung der Trennwand derart ausgerichtet, dass Luft aus dem Garraum in Richtung nach hinten in den Gebläseraum strömt.

Vorteilhaft ist eine Frontseite der Trennwand parallel zur Türe angeordnet und die erste Auslassöffnung ist sowohl vertikal als auch horizontal mittig an der Trennwand, insbesondere an der Frontseite der Trennwand, angeordnet. Schaut der Benutzer durch die Beschickungsöffnung in den Garraum in Richtung der Rückwand, ist die Auslassöffnung sowohl vertikal, d.h. in Bezug auf die Decke und den Boden des Garraums, als auch horizontal, d.h. in Bezug auf die linke und die rechte Garraumseite, mittig angeordnet. Die mittige Anordnung des Messfühlers hat den Vorteil, dass nicht aufgrund von einer asymmetrischen Anordnung innerhalb des Garraums verfälschte Messergebnisse generiert würden.

Insbesondere weist der Lüfter eine Drehachse auf. Der erste Messfühler ist in der Verlängerung der Drehachse angeordnet. Damit steht der Messfühler im Zentrum der vom Lüfter erzeugten Luftströmung. An diesem Ort kann eine zuverlässige Messung durchgeführt werden.

Mit Vorteil ist die Heizung eine Heizleitung in Form eines Kreises. Der erste Messfühler ist entlang der Kreismittelpunktachse angeordnet. Dies hat den Vorteil, dass der Messfühler zentral angeordnet, aber möglichst weit von der Heizleitung beabstandet ist. Die von der Heizung emittierte Wärme verfälscht die Messung dadurch möglichst geringfügig.

Vorteilhaft sind eine zweite Auslassöffnung an der Trennwand und ein zweiter Messfühler an der zweiten Auslassöffnung angeordnet. Insbesondere sind die erste Auslassöffnung und die zweite Auslassöffnung übereinander angeordnet. Die Anordnung von zwei Messfühlern im Gargerät hat den Vorteil, dass genauere Rückschlüsse auf den Zustand des Garguts möglich sind. Ist beispielsweise eine flache Pizza im unteren Bereich des Gargeräts angeordnet, könnte ein Messfühler, welcher mittig oder im oberen Bereich des Garraums angeordnet ist, keine optimalen Messungen durchführen. Aus diesem Grund können mindestens zwei Messfühler die von unterschiedlich grossen Gargütern abgekühlte Luftströmung besser messen.

Insbesondere ist der erste Messfühler im Gebläseraum oder im Garraum angeordnet, insbesondere wobei der Messfühler in einem Metallrohr angeordnet ist. Ist der Messfühler im Garraum, d.h. direkt vor der Trennwand angeordnet, ist dieser von der Heizung im Gebläseraum abgeschirmt, welche das Messergebnis ungünstig beeinflussen könnte. Ist hingegen der Messfühler im Gebläseraum angeordnet, schützt die Trennwand den Messfühler vor Verschmutzungen, welche im Garraum entstehen könnten. Zudem ist der Messfühler vor dem Zugriff des Benutzers abgeschirmt.

In einer besonderen Ausführungsform ist die Steuerung ausgestaltet, in Abhängigkeit der Drehzahl des Lüfters den mit dem ersten Messfühler gemessenen Wert zu korrigieren. Die Korrektur ist erforderlich, weil der gemessene Wert in Abhängigkeit der Strömungsgeschwindigkeit verfälscht ist. Aus diesem Grund ist es für die Auswertung der Messergebnisse wichtig, die Geschwindigkeit der Strömung zu kennen. Ist der Lüfter beispielsweise anhand der Drehzahl gesteuert, kann der geförderte Volumenstrom bzw. die resultierende Geschwindigkeit der Luftströmung ohne weiteres bestimmt werden. Anhand der bekannten Geschwindigkeit können die gemessene Temperatur bzw. Druck korrigiert, bzw. unabhängig von der Strömungsgeschwindigkeit bestimmt werden.

Vorteilhaft ist die Steuerung ausgestaltet, den Lüfter kurzzeitig zu stoppen, mit dem ersten Messfühler eine Kontrollmessung durchzuführen und anschliessend den Lüfter wieder zu aktivieren. Anhand der Kontrollmessung kann der mit dem ersten Messfühler gemessene Wert korrigiert, bzw. unabhängig von der Strömungsgeschwindigkeit bestimmt werden.

Insbesondere ist eine der mindestens einen Auslassöffnung an der Decke angeordnet, wobei einer des mindestens einen Messfühlers an der Auslassöffnung der Decke angeordnet ist. Dieser Messfühler kann alternativ oder zusätzlich zu einem Messfühler vorgesehen sein, welcher an der Trennwand angeordnet ist. Eine Auslassöffnung an der Decke des Gargeräts ist vorgesehen, um Luft aus dem Garraum in einen oberhalb des Garraums angeordneten Abluftraum auszulassen.

Mit Vorteil ist der mindestens eine Messfühler ausgestaltet, eine Temperatur, eine Feuchtigkeit und/oder einen Druck zu messen. D.h. es kann sich um einen Temperatursensor, einen Feuchtesensor oder um einen Drucksensor handeln. Ebenso ist ein Sensor möglich, welcher mehrere der erwähnen physikalischen Eigenschaften messen kann.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1a ein Gargerät gemäss einer ersten Ausführungsform mit Sicht von vorne in den Garraum mit ausgeblendeter Türe;
Fig. 1b das Gargerät gemäss Fig. 1a in gleicher Perspektive mit ausgeblendeter Trennwand;
Fig. 1c das Gargerät gemäss Fig. 1a und Fig. 1b mit Sicht von oben in einer Schnittansicht; und eingeblendetem Gargut.
Fig. 2 ein Gargerät gemäss einer zweiten Ausführungsform mit zwei hinter der Trennwand übereinander angeordneten Messfühlern; und
Fig. 3 ein Gargerät gemäss einer dritten Ausführungsform mit einer an der Decke angeordneten Auslassöffnung und einem an dieser Auslassöffnung angeordneten Messfühler.

### Wege zur Ausführung der Erfindung

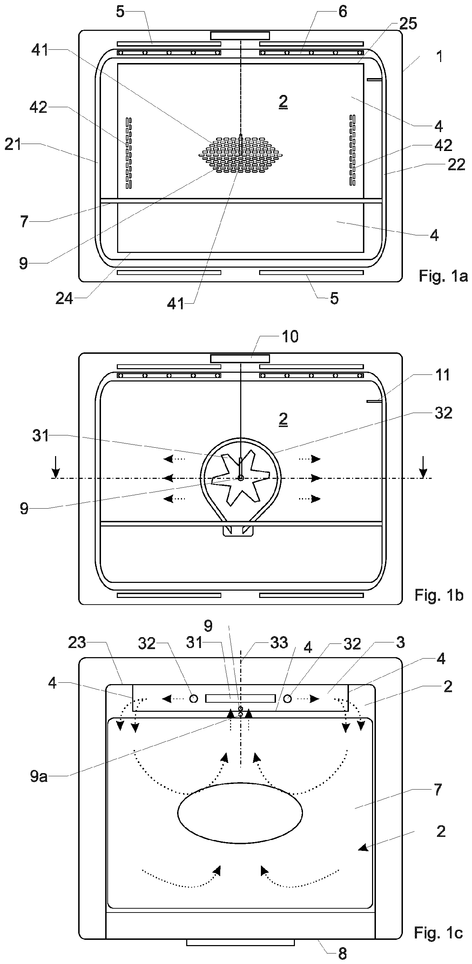

Die Fig. 1a, 1b und 1c zeigen ein Gargerät gemäss einer ersten Ausführungsform. Das Gargerät ist ein klassischer Backofen zur Nutzung in einem privaten Haushalt. Er umfasst ein äusseres Gehäuse 1 und einen Garraum 2 zur Aufnahme von zu garenden Gargütern. Der Garraum 2 weist eine linke Seitenwand 21, eine rechte Seitenwand 22, eine Rückwand 23, einen Boden 24 und eine Decke 25 auf.

Hinter dem Garraum 2 ist ein Gebläseraum 3 angeordnet. Im Gebläseraum 3 sind ein Lüfter 31 und eine Heizung 32 angeordnet. Der Lüfter 31 ist als Radiallüfter ausgestaltet. Die Heizung 32 umfasst eine Heizleitung, welche den Lüfter 31 kreisförmig umgibt. Arbeitet der Backofen im Umluftbetrieb, sind Lüfter 31 und Heizung 32 aktiv.

Garraum 2 und Gebläseraum 3 bilden zusammen den Innenraum des Gargeräts und sind mittels einer Trennwand 4 voneinander getrennt. Die Trennwand 4 erstreckt sich über ca. 80% der Breite des Garraums 2. An den Seiten links und rechts ist die Trennwand 4 nach hinten zur Rückwand 23 abgewinkelt. Die Trennwand 4 weist Auslassöffnungen 41 auf, welche sowohl horizontal als auch vertikal mittig auf der Trennwand 4 angeordnet sind. Vertikal mittig bedeutet, zwischen Boden 24 und Decke 25 in etwa mittig angeordnet. Horizontal mittig bedeutet, zwischen der linken Seitenwand 21 und der rechten Seitenwand 22 in etwa mittig angeordnet. Durch die Auslassöffnungen 41 strömt Luft aus dem Garraum 2 in den Gebläseraum 3. Seitlich, links und rechts, sind Einlassöffnungen 42 auf der Trennwand 4 angeordnet. Luft strömt vom Gebläseraum 3 durch die Einlassöffnungen 42 in den Garraum 2 zurück.

Oberhalb und unterhalb des Garraums 2 sind Ober-/Unterhitzeheizkörper 5 und Grillheizkörper 6 angeordnet.

Im Garraum 2 ist zudem ein Gargutträger 7, insbesondere ein Backblech, vorhanden, um Gargüter auf dem Gargutträger 7 anzuordnen. Gargüter werden vom Benutzer durch die Beschickungsöffnung in den Garraum 2 eingeführt und aus Garraum 2 durch die Beschickungsöffnung entnommen. Die Beschickungsöffnung kann mittels einer Türe 8 verschlossen werden.

Unmittelbar an einer der Auslassöffnungen 41 ist ein Messfühler 9 angeordnet, welcher in einem Metallrohr geschützt ist. Der Messfühler 9 ist vorliegend ausgestaltet, eine Temperatur zu messen. Er könnte alternativ oder zusätzlich ausgestaltet sein, Feuchtigkeit, Druck oder andere physikalische Grössen zu messen.

Der Messfühler 9 ist hinter der Trennwand 4 im Gebläseraum 3 angeordnet. Aus diesem Grund ist der Messfühler 9 in Fig. 1a mit gestrichelten Linien dargestellt und in Fig. 1b mit durchgezogenen Linien. Denn in Fig. 1a ist die Trennwand 4 eingeblendet, sodass der Messfühler 9 hinter der Trennwand 4 nicht oder durch die Auslassöffnungen 41 nur teilweise sichtbar ist. In Fig. 1b ist die Trennwand 4 ausgeblendet und der Messfühler 9 ist gut sichtbar. Alternativ könnte der Messfühler auch unmittelbar vor der Trennwand 4 im Garraum 2 angeordnet sein. Eine solche alternative Anordnung ist in Fig. 1c mittels Bezugsziffer 9a dargestellt.

Diejenige Fläche, über welche sich jeweils eine Auslassöffnung 41 erstreckt, wird als Öffnungsfläche bezeichnet. Die Öffnungsfläche liegt vorliegend parallel zur Rückwand 23 des Garraums 2. Die Normalrichtung der Öffnungsfläche erstreckt sich entsprechend von der Trennwand 4 nach vorne zur Türe 6 bzw. in die andere Richtung von der Trennwand 4 nach hinten zur Rückwand 23. Der Messfühler 9 ist in Normalrichtung der Öffnungsfläche der Auslassöffnung 41 angeordnet. Das bedeutet dass mit Bezug auf die Perspektive in Fig. 1a der Messfühler 9 nicht links oder rechts von den Auslassöffnungen 41, sondern direkt hinter oder vor den Auslassöffnungen 41 angeordnet ist.

Der Fühlpunkt des Messfühlers 9 ist in den Fig. 1a und 1b am unteren Ende des Messfühler 9 angeordnet, also präzise in der Mitte der Trennwand 4. Dabei liegt der Fühlpunkt bzw. der Messfühler 9 in der Verlängerung der Drehachse 33 des Lüfters 31. Gleichzeitig liegen der Fühlpunkt bzw. der Messfühler 9 im Kreismittelpunkt der kreisförmigen Heizleitung der Heizung 32.

Anhand der Fig. 1c sollen nun die Vorteile der beschriebenen Anordnung des Messfühlers 9 dargestellt werden. Die Fig. 1c zeigt eine Schnittansicht durch das Gargerät, wobei die Schnittlinie in Fig. 1b mittels einer Strichpunkt-Linie eingezeichnet ist.

Im Heissluft-Betrieb dreht der Lüfter 9, welcher als Radiallüfter ausgestaltet ist. D.h. Luft strömt vom Garraum 2 durch die Auslassöffnungen 41 in den Gebläseraum 3 axial auf den Lüfter 9 zu. Der Lüfter 9 befördert die Luft radial nach aussen, die Luft überströmt die Heizung 32, wird dabei erwärmt und strömt durch die Einlassöffnungen 42 zurück in den Garraum 2. Der Lüfter 9 ist dabei von der Steuerung 10 drehzahlgesteuert.

Ist die Oberflächentemperatur des auf dem Gargutträger 7 angeordneten Garguts tiefer als die Temperatur der in den Garraum 2 einströmenden Luft, kühlt das Gargut die Luft im Garraum ab. D.h. diejenige Luft, welche den Garraum 2 durch die Auslassöffnungen 41 verlässt, ist kälter als diejenige Luft, welche durch die Einlassöffnungen 42 in den Garraum 2 eintritt. Die Temperaturdifferenz zwischen der Lufttemperatur im Garraum 2 und der Lufttemperatur der den Garraum 2 verlassenden Luftströmung gibt somit Auskunft über die Oberflächentemperatur und somit über den Garzustand des Garguts. Diese Temperaturdifferenz wird mittels des Messfühler 9 zur Messung der den Garraum 2 verlassenden Luft und mittels eines Temperatursensors 11 zur Messung der Garraumtemperatur erfasst.

Je höher die Geschwindigkeit der am Messfühler 9 vorbeiströmenden Luft ist, umso tiefer wird die gemessene Temperatur sein. Aus diesem Grund korrigiert die Steuerung den Messwert des Messfühlers 9 anhand der an der Auslassöffnung existierenden Strömungsgeschwindigkeit. Die Strömungsgeschwindigkeit ist bekannt, weil der Lüfter 31 drehzahlgesteuert ist. Alternativ oder zusätzlich ist es auch möglich, den Lüfter 31 kurzzeitig zu stoppen, eine Messung bei ruhender Luft vorzunehmen, anschliessend den Lüfter 31 wird zu aktivieren und daraus die Verfälschung der gemessenen Temperatur zu bestimmen.

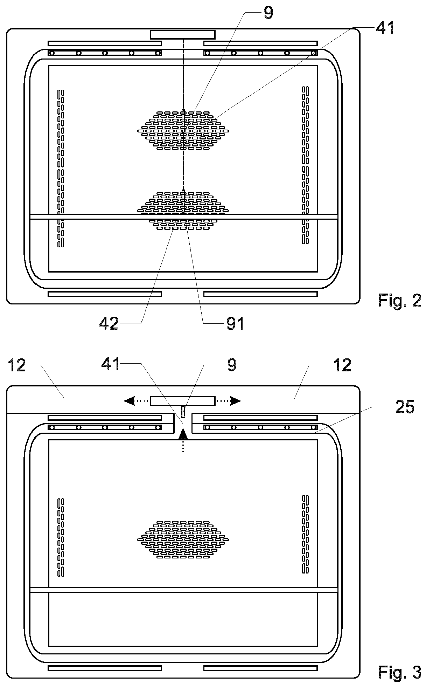

Fig. 2 zeigt eine zweite Ausführungsform eines Gargeräts. An der Trennwand 4 sind Auslassöffnungen 41 nicht mittig, sondern in einem oberen Bereich und in einem unteren Bereich angeordnet. Hinter einer ersten Auslassöffnung 41 im oberen Bereich ist ein erster Messfühler 9 im Gebläseraum 3 angeordnet. Hinter einer zweiten Auslassöffnung 42 im unteren Bereich ist ein zweiter Messfühler 91 angeordnet. Der erste Messfühler 9 und der zweite Messfühler 91 sind somit übereinander angeordnet.

Liegt auf dem Gargutträger 7 beispielsweise eine flache Pizza, kann nur der im unteren Bereich angeordnete zweite Messfühler 91 Messwerte erfassen, welche einen verlässlichen Rückschluss auf den Garzustand der Pizza ermöglichen.

Die Fig. 3 zeigt eine dritte Ausführungsform eines Gargeräts. Bei dieser Ausführungsform ist an der Decke 25 des Garraums 2 eine Auslassöffnung 41 angeordnet. Luft entweicht durch die Auslassöffnung 41 in einen oberhalb des Garraums angeordneten Abluftraum 12. Am Ende des Abluftraums 12 verlässt die Luft das Gargerät. An der Auslassöffnung 41 ist ein Messfühler 9 angeordnet, welcher Temperatur, Feuchtigkeit und Luftdruck aufzeichnet. Erreicht das Gargut eine Temperatur von 100°C, stösst dieses Dampf aus, welcher vom Messfühler 9 gemessen wird. Dadurch kann ein Rückschluss auf den Zustand des Garguts gezogen werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Gargerät, insbesondere ein Backofen, ein Dampfgargerät oder ein Kombigargerät, umfassend
- einen Innenraum mit einem Garraum (2) und einen Gebläseraum (3), wobei der Garraum (2) eine Türe (8) zum Schliessen und Öffnen einer Beschickungsöffnung und eine Decke (25) aufweist,
- eine Heizung (32) und einen Lüfter (31), welche im Gebläseraum (3) angeordnet sind,
- eine zwischen dem Garraum (2) und dem Gebläseraum (3) angeordnete Trennwand (4),
- mindestens eine Auslassöffnung (41) durch welche Luft aus dem Garraum (2) hinausströmt,
- eine Steuerung (10),
**dadurch gekennzeichnet, dass** an der mindestens einen Auslassöffnung (41) mindestens ein Messfühler (9) angeordnet ist.

2. Gargerät nach Anspruch 1, wobei die Auslassöffnung (41) eine Öffnungsfläche aufweist und der Messfühler (9) in Normalrichtung der Öffnungsfläche innerhalb des Garraums (2) oder ausserhalb des Garraums (2) angeordnet ist.

3. Gargerät nach einem der vorangehenden Ansprüche, wobei eine erste der mindestens einen Auslassöffnung (41) an der Trennwand (4) angeordnet ist und wobei ein erster des mindestens einen Messfühlers (9) an der ersten Auslassöffnung (41) der Trennwand (4) angeordnet ist.

4. Gargerät nach Anspruch 3, wobei die erste Auslassöffnung (41) der Trennwand (4) derart ausgerichtet ist, dass Luft aus dem Garraum (2) in Richtung nach hinten durch die erste Auslassöffnung (41) in den Gebläseraum (3) strömt.

5. Gargerät nach einem der Ansprüche 3 oder 4, wobei
- eine Frontseite der Trennwand (4) parallel zur Türe (8) angeordnet ist und die erste Auslassöffnung (41) sowohl vertikal als auch horizontal mittig an der Trennwand (4) angeordnet ist, und/oder
- wobei der Lüfter (31) eine Drehachse (33) aufweist und der erste Messfühler (9) in Verlängerung der Drehachse (33) angeordnet ist, und/oder
- wobei die Heizung (32) eine Heizleitung in Form eines Kreises ist und wobei der erste Messfühler (9) entlang der Kreismittelpunktachse angeordnet ist.

6. Gargerät nach einem der Ansprüche 3 oder 4, wobei eine zweite (42) der mindestens einen Auslassöffnung an der Trennwand (4) angeordnet ist, wobei ein zweiter Messfühler (91) an der zweiten Auslassöffnung (42) der Trennwand (4) angeordnet ist,
insbesondere wobei die erste Auslassöffnung (41) und die zweite Auslassöffnung (42) übereinander angeordnet sind.

7. Gargerät nach einem der Ansprüche 3 bis 6, wobei der erste Messfühler (9) im Gebläseraum (3) oder im Garraum (2) angeordnet ist,
insbesondere wobei der Messfühler (9) in einem Metallrohr angeordnet ist.

8. Gargerät nach einem der vorangehenden Ansprüche, wobei die Steuerung (10) ausgestaltet ist, in Abhängigkeit der Drehzahl des Lüfters (31) den mit dem ersten Messfühler (9) gemessenen Wert zu korrigieren.

9. Gargerät nach einem der vorangehenden Ansprüche, wobei die Steuerung (10) ausgestaltet ist, den Lüfter (31) kurzzeitig zu stoppen, mit dem ersten Messfühler (9) eine Kontrollmessung durchzuführen, anschliessend den Lüfter (31) wieder zu aktivieren und während der Lüfter (31) in Betrieb ist, den mit dem ersten Messfühler (9) gemessenen Wert in Abhängigkeit des mit der Kontrollmessung gemessen Werts zu korrigieren.

10. Gargerät nach einem der vorangehenden Ansprüche, wobei eine der mindestens einen Auslassöffnung (41) an der Decke (25) angeordnet ist, wobei einer des mindestens einen Messfühlers (9) an der Auslassöffnung (41) der Decke (25) angeordnet ist.

11. Gargerät nach einem der vorangehenden Ansprüche, wobei der mindestens eine Messfühler (9) ausgestaltet ist, eine Temperatur, eine Feuchtigkeit und/oder ein Druck zu messen.
